# EUROPÄISCHE PATENTSCHRIFT

(11) **EP 2 248 410 B1**
(45) Veröffentlichungstag und Bekanntmachung des Hinweises auf die Patenterteilung: **09.01.2013**
(21) Anmeldenummer: 10153807.2
(22) Anmeldetag: 17.02.2010
(51) Int. Cl.: B62D 13/02, B62D 21/04, B62D 21/14, B62D 21/20, A01D 75/00

(54) **Transportwagen für einen Erntemaschinenvorsatz**
Transport vehicle for a harvesting machine header
Chariot de transport pour un tablier de coupe d'une moissonneuse

(30) Priorität: 08.05.2009 DE 102009020460
(43) Veröffentlichungstag der Anmeldung: 10.11.2010
(73) Patentinhaber: CLAAS Selbstfahrende Erntemaschinen GmbH, 33428 Harsewinkel (DE)
(72) Erfinder: Göblyös, Attila, 5200, Törökszentmiklós (HU); Nübel, Thomas, 37688, Beverungen (DE); Vincze, Tamás, 3531, Miskolc (HU)

(56) Entgegenhaltungen:
- DE-A1- 2 539 464
- DE-C- 123 199
- FR-A- 933 973

## Beschreibung

Die vorliegende Erfindung betrifft einen Transportwagen für einen Erntemaschinenvorsatz, insbesondere für ein Schneidwerk eines Mähdreschers. Die Breite derartiger Erntemaschinenvorsätze ist regelmäßig wesentlich größer als die zulässige maximale Breite eines Fahrzeugs im öffentlichen Straßenverkehr, so dass eine Erntemaschine mit montiertem Vorsatz öffentliche Straßen nicht benutzen kann. Um den Vorsatz von einem Aufbewahrungsort zum Einsatzort zu befördern, wird regelmäßig ein Transportwagen benötigt, auf dem der Vorsatz quer zu seiner Arbeitsrichtung orientiert befördert werden kann.

Die große Länge eines solchen Transportwagens erschwert das Manövrieren in der Kurvenfahrt. Bei einachsiger Bauweise würde das Heck des Transportwagens bei Kurvenfahrt unzumutbar weit ausschwenken. Bei mehrachsiger Bauweise mit einem vorderen und einem hinteren Fahrwerksteil, die jeweils wenigstens eine Achse umfassen, ist eine ausreichende Manövrierfähigkeit nur über eine Drehschemellenkung zu erreichen.

Ein Transportwagen muss in der Lage sein, Unebenheiten des befahrenen Untergrundes auszugleichen, denn wenn zum Beispiel bei einem zweiachsigen Transportwagen ein Rad den Kontakt zur Fahrbahn verliert, ist der Wagen nur dann lagestabil, wenn sein Schwerpunkt oberhalb eines von den Aufstandsflächen der übrigen drei Räder aufgespannten Dreiecks befindet. Da diese Anforderung nicht für jede mögliche Kombination von drei Rädern erfüllbar ist, besteht die Gefahr, dass ein starrer Transportwagen ins Kippen gerät, wenn ein Rad den Bodenkontakt verliert.

Aus DT 25 39 464 A1 ist ein Transportwagen für einen Erntemaschinenvorsatz nach dem Oberbegriff des Anspruchs 1 bekannt. Bei diesem Transportwagen ist eine Vorderachse mit einem den Erntemaschinenvorsatz aufnehmenden Rahmen über einen Drehschemel verbunden, und der Drehschemel ist zum Ausgleich von Bodenunebenheiten in Bezug auf den Rahmen um eine sich in Wagenlängsrichtung erstreckende Ausgleichsachse schwenkbar. Bei Geradeausfahrt und bei Kurvenfahrt mit mäßigem Einschlagwinkel kann durch Schwenken der vorderen Radachse um die Ausgleichsachse Bodenkontakt für alle vier Räder aufrechterhalten werden. Ein Problem ergibt sich jedoch, wenn der Einschlagwinkel des Drehgestells sich dem rechten Winkel nähert. Wenn der Einschlagwinkel 90° beträgt, sind nämlich die Radachse und die Ausgleichsachse parallel, und eine auf den Drehschemel von einem Zugfahrzeug ausgeübte Zugkraft würde, falls nicht In diesem Zustand die Ausgleichsachse blockiert wäre, zu einem Wegkippen der Vorderachse unter dem Drehschemel führen. In einem solchen Zustand wäre die Standfestigkeit des Fahrzeugs nicht gewährleistet.

Aus der gattungsbildenden FR 933,973 A ist ein Transportwagen gemäß dem Oberbegriff des Anspruches 1 bekannt.

Aufgabe der vorliegenden Erfindung ist, einen Transportwagen für einen Erntemaschinenvorsatz anzugeben, der einen großen Einschlagwinkel des vorderen Fahrwerkteiles ohne ein Anstoßen von dessen Rädern am Rahmen zu gewährleisten vermag.

Die Aufgabe wird gelöst, indem bei einem Transportwagen für einen Erntemaschinenvorsatz mit einem Rahmen und einem vorderen und einem hinteren Fahrwerksteil, die jeweils wenigstens eine Radachse aufweisen, wobei der vordere Fahrwerksteil in Bezug zum Rahmen um eine vertikale Lenkachse und eine horizontale Ausgleichsachse schwenkbar ist, die Ausgleichsachse zusammen mit der wenigstens einen Radachse des vorderen Fahrwerksteils um die Lenkachse schwenkt. Da infolgedessen Ausgleichsachse und Radachse niemals parallel werden können, besteht keine Gefahr, dass der Transportwagen auf eine von einem Zugfahrzeug ausgeübte Zugkraft anstatt durch eine Rollbewegung der Räder um die Radachse durch ein Kippen um die Ausgleichsachse reagiert. Um das Erreichen eines großen Einschlagwinkels des vorderen Fahrwerksteils ohne ein Anstoßen von dessen Rädern am Rahmen zu erleichtern, ist In einem Längsträger des Rahmens ein Portal gebildet, in das bei Kurvenfahrt ein Rad des vorderen Fahrwerksteils eingreifen kann. Mittel zum wenigstens teilweisen Blockieren der Schwenkbarkeit des vorderen Fahrwerksteils um die Ausgleichsachse sind zweckmäßigerweise ausgelegt, um im Falle des Eingriffs eines Rades in das Portal wirksam zu werden.

Es kann sinnvoll sein, die Bewegungsfreiheit des vorderen Fahrwerksteils um die Ausgleichsachse auch bei einem starken Lenkeinschlag einzuschränken, um sicherzustellen, dass eine Schwenkbewegung um die Ausgleichsachse nicht zum Anstoßen eines Rades des vorderen Fahrwerksteils gegen den Rahmen führen kann.

Generell kann, um die Gefahr eines solchen Anschlags zu verringern, der vordere Fahrwerksteil mit kleineren Rädern versehen sein als der hintere Fahrwerksteil.

Wenn in an sich bekannter Weise die Lenkachse durch einen Drehkranz festgelegt ist, dann kann das Schwenken der Ausgleichsachse gemeinsam mit der Radachse zweckmäßigerweise dadurch sichergestellt werden, dass die Ausgleichsachse durch ein Gelenk festgelegt ist, das die wenigstens eine Radachse des vorderen Fahrwerksteils mit dem Drehkranz verbindet.

Um den Berührungsschutz zwischen Rad und Rahmen zu gewährleisten, genügt es, wenn die Mittel zum Blockieren der Schwenkbarkeit des vorderen Fahrwerksteils dessen Schwenkbewegungsfreiheit um die Ausgleichsachse nur einseitig einschränken, d. h. von den zwei entgegengesetzten Anschlagstellungen der Schwenkbewegung um die Ausgleichsachse ist nur diejenige durch die Mittel zum Blockieren unerreichbar gemacht, bei der dies unumgänglich ist, um einen Kontakt eines Rades mit dem Rahmen zu vermeiden, wohingegen die andere Anschlagstellung erreichbar bleibt und eingenommen werden kann, wenn die Kontur des befahrenen Untergrundes dies erfordert.

Die Mittel zum wenigstens teilweisen Blockieren der Schwenkbarkeit können insbesondere ausgelegt sein, um die Radachse aus einer Mittelstellung der Schwenkbewegung um die Ausgleichsachse auszulenken. So kann insbesondere ein durch eine Lenkbewegung des Drehschemels unter den Rahmen einrückendes Rad in eine tiefere Stellung gezwungen werden als ein gegenüberliegendes Rad der gleichen Achse. Dies reduziert die Bodenfreiheit des Rahmens, die für einen starken Lenkeinschlag des vorderen Fahrwerksteils erforderlich ist.

Als Mittel zum wenigstens teilweisen Blockieren der Schwenkbarkeit können eine Kufe und eine im Falle des Eingriffs eines Rades in das Portal an der Kufe anliegende Rolle vorgesehen sein.

Vorzugsweise ist die Kufe ortsfest am Gestell angebracht, während die Rolle am vorderen Fahrwerksteil angebracht ist und dessen Lenkbewegung mitmacht. Weitere Merkmale und Vorteile der Erfindung ergeben sich aus der nachfolgenden Beschreibung von Ausführungsbeispielen unter Bezugnahme auf die beigefügten Figuren. Es zeigen:
- Fig. 1: eine Seitenansicht eines erfindungsgemäßen Transportfahrzeugs;
- Fig. 2: eine Draufsicht auf das Transportfahrzeug der Fig. 1;
- Fig. 3: eine schematische Seitenansicht des Vorderteils des Transportwagens mit unter 90° eingeschlagenem vorderen Fahrwerksteil;
- Fig. 4: eine perspektivische Ansicht eines vorderen Bereichs des Transportfahrzeugs;
- Fig. 5: Einzelne Komponenten des vorderen Bereichs des Transportfahrzeugs in auseinandergezogener Ansicht;
- Fig. 6: einen schematischen Schnitt durch den Drehkranz des Fahrzeugs und mit ihm verbundene Grundplatten des Rahmens und des vorderen Fahrwerksteils
- Fig. 7: eine perspektivische Ansicht einer Grundplatte des vorderen Fahrwerksteils;
- Fig. 8: eine schematische Seitenansicht mit unter ca. 45° eingeschlagenem vorderen Fahrwerksteil gemäß einer zweiten Ausgestaltung der Erfindung; und
- Fig. 9: eine zu Fig. 8 analoge Seitenansicht mit unter 90° eingeschlagenem vorderen Fahrwerksteil.

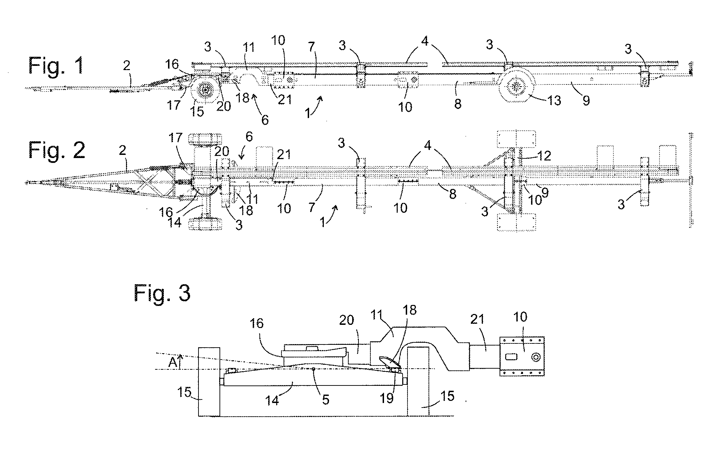

Die Fig. 1 und 2 zeigen ein erfindungsgemäßes Transportfahrzeug für einen Erntemaschinenvorsatz in einer Seitenansicht bzw. einer Draufsicht. Ein starrer Rahmen des Transportfahrzeugs umfasst als Hauptbestandteile einen Längsträger 1, der sich, abgesehen von einer Deichsel 2, im Wesentlichen über die gesamte Länge des Fahrzeugs erstreckt, an dem Längsträger 1 befestigte, in Fahrzeugquerrichtung orientierte Arme 3 sowie Trägeraufbauten an den Armen 3, die für den jeweils zu transportierenden Erntevorsatz spezifisch ausgestaltet sein können. Die Trägeraufbauten umfassen hier unter anderem mehrere von je zwei Armen 3 getragene Längsschienen 4 sowie in den Fig. nicht sichtbare, nach oben offene Trichter oder Becher, die vorgesehen sind, um Raststifte des zu transportierenden Erntemaschinenvorsatzes aufzunehmen und diesen so in horizontaler Richtung auf dem Transportfahrzeug zu fixieren.

Der Längsträger 1 ist aus mehreren Längsträgerstücken 6, 7, 8, 9 zusammengefügt, die jeweils paarweise durch eine Manschette 10 verbunden sind. Die rückwärtigen Längsträgerstücke 7, 8, 9 bestehen jeweils im Wesentlichen aus einem Stück Hohlprofil von rechteckigem Querschnitt, das vordere Längsträgerstück 6 umfasst zwei Hohlprofilabschnitte 20, 21, die untereinander durch ein Portal 11 verbunden sind. Eine hintere Radachse 12 mit Rädern 13 ist starr am Längsträgerstück 8 befestigt. Durch Weglassen oder Variieren der Länge der Längsträgerstücke 7, 9 können unterschiedliche Modelle von Transportfahrzeugen für Erntevorsätze unterschiedlicher Breite mit geringem Aufwand bereitgestellt werden.

Die Deichsel 2 greift an einer Grundplatte 17 eines Drehschemels an, die mit dem vordersten Längsträgerstück 6 über einen Drehkranz 16 verbunden ist. Eine vordere Radachse 14 ist ihrerseits an der Grundplatte 17 um eine Ausgleichsachse 5 (siehe Fig. 3) schwenkbar aufgehängt, die in Längsrichtung der Deichsel 2 verläuft und somit stets im rechten Winkel zur Radachse 14 orientiert ist.

Wenn die Deichsel 2 rechtwinklig zum Längsträger 1 ausgelenkt ist, befindet sich eines der Räder 15 der vorderen Radachse 14 in der nach unten offenen Aussparung des Portals 11. Um die Anforderungen an die Bodenfreiheit des Portals 11 gering zu halten, sind die vorderen Räder 15 kleiner als die hinteren Räder 13.

Einer elementaren, nicht zeichnerisch dargestellten Ausgestaltung der Erfindung zufolge kann das Portal 11 groß genug sein, um auch dann das darin eingerückte Rad 15 nicht zu berühren, wenn die vordere Radachse 14 um die Ausgleichsachse bis in eine Anschlagstellung geschwenkt ist, in der das in das Portal 11 eingreifende Rad 15 höher liegt als das gegenüberliegende Rad 15 der vorderen Radachse 14. Eine solche Ausgestaltung würde eine umso größere Bodenfreiheit des Portals 11 erfordern, je größer die Schwenkbewegungsfreiheit der vorderen Achse 14 um die Ausgleichsachse 5 ist, und dementsprechend hoch käme der Schwerpunkt des Erntevorsatzes auf dem Transportfahrzeug zu liegen. Um das Aufladen des Erntevorsatzes zu erleichtern und eine gute Kippsicherheit des Transportfahrzeugs zu gewährleisten, sollte dieser Schwerpunkt möglichst tief liegen. An einem vorderen Ende des Portals 11 ist daher gemäß der in den Fig. dargestellten Ausgestaltung eine Kufe 18 mit zwei vom Längsträger 1 schräg nach oben und zu den Seiten abstehenden Flügeln angebracht, die, wenn sich der Einschlagwinkel der vorderen Radachse 14 dem rechten Winkel nähert, mit der vorderen Radachse 14 in Kontakt gelangt und deren Schwenkbewegungsfreiheit um die Ausgleichsachse 5 einseitig einschränkt.

Fig. 3 zeigt eine schematische Seitenansicht des vorderen Bereichs des Transportfahrzeugs mit unter 90° eingeschlagener vorderer Radachse 14. Die vordere Radachse 14 ist hier mit zwei kegelförmigen Rollen 19 ausgestattet, von denen eine bei Annäherung an den 90°-Einschlagwinkel mit der Unterseite der Kufe 18 in Kontakt gerät und an dieser abrollt. In der dargestellten Konfiguration, mit einem Einschlagwinkel von 90°, berührt die Rolle 19 den tiefsten Punkt an der Unterseite der Kufe 18 und schränkt so die Bewegungsfreiheit der Radachse 14 um die (hier zur Ebene der Figur senkrechte) Ausgleichsachse 5 maximal ein. Die Radachse 14 ist horizontal orientiert, das heißt, alle vier Räder 13, 15 des Fahrzeugs haben Bodenkontakt, wenn der Boden eben ist, und eine Schwenkbewegung der Radachse 14 im Gegenuhrzeigersinn ist durch den Kontakt der Rolle 19 mit der Kufe 18 blockiert. Im Falle einer Bodenvertiefung unter dem (in der Ansicht der Fig. 3) linken Vorderrad 15 würde dieses daher den Bodenkontakt verlieren. Die Standfestigkeit des Fahrzeugs ist dadurch nicht maßgeblich beeinträchtigt, da die Aufstandsflächen des rechten Vorderrades 15 und der Hinterräder 13 ein gleichschenkliges Dreieck aufspannen, über dem der Schwerpunkt des beladenen Fahrzeugs mit Gewissheit liegt.

Falls der Untergrund unter dem linken Vorderrad 15 höher als unter dem rechten ist, ist eine Ausgleichs-Schwenkbewegung der Vorderachse 14 im Uhrzeigersinn, wie durch einen Pfeil A in Fig. 3 angedeutet, durch die beide Vorderräder 15 Bodenkontakt behalten, weiterhin möglich; der Kontakt zwischen Kufe 18 und Rolle 19 würde in diesem Fall verloren gehen.

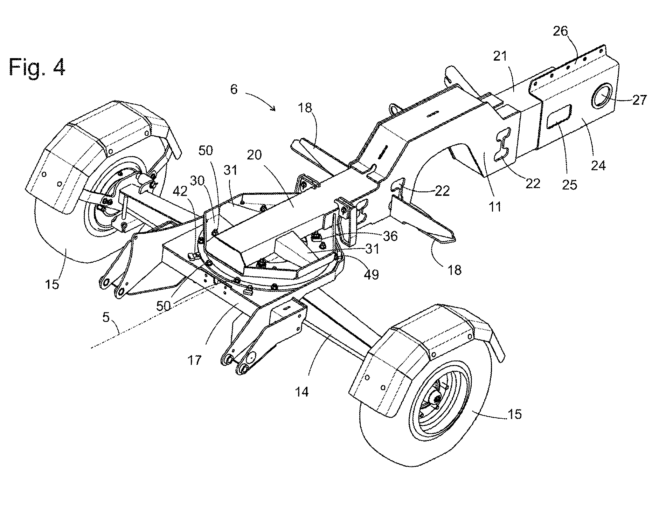

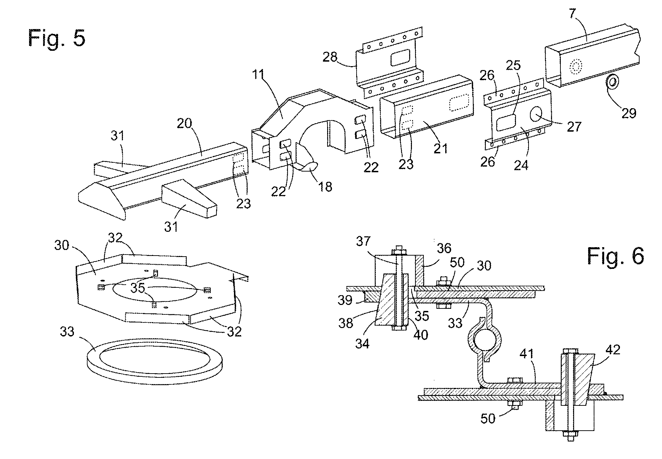

Details des Aufbaus des Transportwagens werden deutlich aus der perspektivischen Ansicht eines vorderen Bereichs des Wagens in Fig. 4 und der auseinander gezogenen Darstellung der Fig. 5. Das vordere Längsträgerstück 6 setzt sich zusammen aus dem Portal 11 und den zwei Hohlprofilabschnitten 20, 21 die miteinander verbunden sind, indem ein hinteres Ende des Abschnitts 20 und ein vorderes Ende des Abschnitts 21 in Aufnahmen des Portals 11 eingesteckt und am Portal 11 verschweißt sind. Die zwei Aufnahmen des Portals 11 weisen jeweils seitliche Fenster 22 auf, in denen die eingeschobenen Enden der Abschnitte 20, 21 frei liegen, und die Schweißverbindung zwischen dem Portal 11 und den Abschnitten 20, 21 wird durch entlang der Ränder dieser Fenster 22 verlaufende Schweißnähte hergestellt. Der Verlauf dieser Schweißnähte ist an den Abschnitten 20, 21 in Fig. 5 jeweils als gestrichelter Umriss 23 eingezeichnet.

In entsprechender Weise ist der hintere Hohlprofilabschnitt 21 mit einem Manschettenstück 24 entlang der Ränder eines in dieses eingeschnittene Fenster 25 verschweißt. Das Manschettenstück 24 hat einen hutförmigen Querschnitt mit zwei von Ober- und Unterseite des Hohlprofilabschnitts 21 vertikal abstehenden, sich in Längsrichtung des Längsträgers 1 erstreckenden Flanschen 26. Ein kreisrunder Ausschnitt 27 ist in einem über das hintere Ende des Hohlprofilabschnitts 21 überstehenden Bereich des Manschettenstücks 24 gebildet.

Ein zweites Manschettenstück 28, das dem ersten Manschettenstück 24 bis auf das Fehlen des Ausschnitts 27 gleicht, und ein Ring 29 sind an entgegengesetzten Seiten des Längsträgerstücks 7 angeschweißt. Die Längsträgerstücke 6, 7 werden verbunden, indem die Flansche 26 der Manschettenstücke 24, 28 einander gegenüberliegend platziert werden, wobei der Ring 29 im Ausschnitt 27 formschlüssig zum Eingriff kommt, und die Manschettenstücke 24, 28 durch Zusammenschrauben zur vollständigen Manschette 10 verbunden werden.

Eine Grundplatte 30 von im Wesentlichen achteckiger Form ist an der Unterseite des Hohlprofilabschnitts 20 sowie zweier kreuzförmig von diesem abstehender Arme 31 befestigt. Die Grundplatte 30 ist durch abgekantete Randstege 32 versteift. Sie dient als Träger für einen oberen Ring 33 eines Drehkranzes.

Der Ring 33 ist an der Grundplatte 30 positioniert mit Hilfe von vier justierbaren Keilen 34, von denen einer in Fig. 6 im Schnitt gezeigt ist. Der Keil 34 durchsetzt eine Öffnung 35 der Grundplatte 30, und seine Spitze greift in einen in Draufsicht C-förmigen Abstandhalter 36 an der Oberseite der Grundplatte 30 ein. Der Keil 34 ist durch eine Spannschraube 37 fixiert, die an der Oberseite des Abstandhalters 36 sowie an der Unterseite des Keils 34 angreift. Eine schräge Flanke 38 des Keils 34 liegt an einer komplementär abgeschrägten Flanke eines an einem Rand der Öffnung 35 angeschweißten Verstärkungsblocks 39 an. Eine gegenüberliegende vertikale Flanke 40 des Keils 34 drückt gegen den Innenumfang des Rings 33. Durch Justieren der Spannschrauben 37 der vier Keile 34 kann die Lage des Rings 33 an der Grundplatte 30 und damit die Lage der durch den Drehkranz 16 festgelegten Lenkachse des Fahrzeugs unabhängig von eventuellen Fertigungstoleranzen des Rings 33 exakt eingestellt werden. Zur dauerhaften Befestigung des Rings 33 an der Grundplatte dienen Schrauben 50, die in Schraublöchern des Rings 33 und der Grundplatte 30 aufgenommen sind. Die Schrauben greifen spielhaltig in die Schraublöcher ein. Sie können daher starke vertikale Zugkräfte, aber nur beschränkte Scherkräfte parallel zur Grundplatte 30 aufnehmen. Diese Scherkräfte werden spielfrei von den am Rand des Rings 33 anliegenden Keilen 34 aufgefangen.

Wie ferner in Fig. 6 zu sehen, ist ein unterer Ring 41 des Drehkranzes in analoger Weise mit Hilfe von gegen seinen Außenumfang drückenden Keilen 42 und Schrauben 50 an der Grundplatte 17 des Drehschemels fixiert.

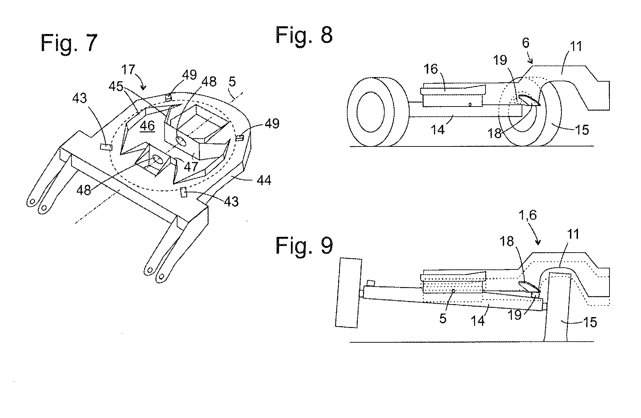

Die Grundplatte 17 mit zwei die Keile 42 aufnehmenden Öffnungen 43 ist in Fig. 7 in einer perspektivischen Ansicht gezeigt. Den Öffnungen 43 gegenüber liegen jeweils fest an die Grundplatte 17 angeschweißte, einen unbeweglichen Anschlag für den Ring 41 bildende Blöcke 49. Die zwei Blöcke 49 legen die Position des Rings 41 an der Grundplatte 17 eindeutig fest; die Keile 42 dienen hier lediglich dazu, Fertigungstoleranzen des Rings 41 zu kompensieren und den Ring an der Platte 17 in horizontaler Richtung spielfrei zu machen. Die Grundplatte 17 ist versteift durch einen außen umlaufenden Randsteg 44 sowie durch Stege 45, die sich entlang der Ränder einer zentralen Öffnung 46 erstrecken. Zwei sich am vorderen bzw. hinteren Rand der Öffnung 46 gegenüberliegende vertikale Platten 47 weisen jeweils eine Bohrung 48 auf, die vorgesehen ist, um einen Achszapfen der vorderen Radachse 14 aufzunehmen, der die Ausgleichsachse 5 festlegt.

Fig. 8 zeigt eine Seitenansicht des vorderen Bereichs eines Transportwagens gemäß einer abgewandelten Ausgestaltung der Erfindung mit unter circa 45° bezogen auf die Fahrtrichtung nach rechts eingeschlagener vorderer Radachse 14. In dieser Stellung greift keines der vorderen Räder 13 in das Portal 11 ein, aber es ist zu erkennen, dass der Durchmesser der Vorderräder 3 hier größer ist als die maximale Bodenfreiheit des Portals 11. Auch hier trägt die Radachse 14 an ihrer Oberseite zwei Rollen 19. Die Rolle 19 des rechten Vorderrades 13 ist in der Konfiguration der Fig. 8 hinter dem Längsträgerstück 6 verborgen und liegt höher als der tiefste Punkt der Kufe 18.

Mit zunehmendem Einschlagwinkel gelangt diese Rolle 19 schließlich in Kontakt mit der Kufe 18. Eine weitere Vergrößerung des Anschlagwinkels ist dann nur möglich, wenn die Rolle 19 die Kufe 18 anhebt. Es ergibt sich schließlich eine Konfiguration wie in Fig. 9 gezeigt: hier beträgt der Einschlagwinkel 90°, die Rolle 19 liegt unter dem tiefsten Punkt der Kufe 18, und zusammen mit der dadurch bewirkten Anhebung des Längsträgers 1 ist auch der Drehkranz 16 angehoben, und die vordere Radachse 14 ist um ihre Ausgleichsachse geschwenkt, so dass ein Vorderrad 13 vom Boden abgehoben ist. So schafft sich beim Einschlagen das Fahrzeug die für das Einrücken eines Vorderrades 15 in das Portal 11 erforderliche Bodenfreiheit selbst. Solange hingegen der Einschlagwinkel klein genug ist, um einen Bodenkontakt beider Vorderräder 15 zu ermöglichen, ist eine optimal niedrige Schwerpunktslage gewährleistet.

### Bezugszeichen

- 1: Längsträger
- 2: Deichsel
- 3: Arme
- 4: Längsschienen
- 5: Ausgleichsachse
- 6: Längsträgerstück
- 7: Längsträgerstück
- 8: Längsträgerstück
- 9: Längsträgerstück
- 10: Manschette
- 11: Portal
- 12: hintere Radachse
- 13: Rad
- 14: vordere Radachse
- 15: Rad
- 16: Drehkranz
- 17: Grundplatte
- 18: Kufe
- 19: Rolle
- 20: Hohlprofilabschnitt
- 21: Hohlprofilabschnitt
- 22: Fenster
- 23: Schweißnaht
- 24: Manschettenstück
- 25: Fenster
- 26: Flansch
- 27: Ausschnitt
- 28: Manschettenstück
- 29: Ring
- 30: Grundplatte
- 31: Arm
- 32: Randsteg
- 33: Ring
- 34: Keil
- 35: Öffnung
- 36: Abstandhalter
- 37: Spannschraube
- 38: schräge Flanke
- 39: Verstärkung
- 40: vertikale Flanke
- 41: Ring
- 42: Keil
- 43: Öffnung
- 44: Randsteg
- 45: Steg
- 46: Öffnung
- 47: Platte
- 48: Bohrung
- 49: Block
- 50: Schraube

## Patentansprüche

1. Transportwagen für einen Erntemaschinenvorsatz mit einem Rahmen (1, 3, 4) und einem jeweils wenigstens eine Radachse (14; 12) aufweisenden vorderen und hinteren Fahrwerksteil, wobei der vordere Fahrwerksteil in Bezug zum Rahmen um eine vertikale Lenkachse und eine horizontale Ausgleichsachse (5) schwenkbar ist, die Ausgleichsachse (5) zusammen mit der wenigstens einen Radachse (14) des vorderen Fahrwerksteils um die Lenkachse schwenkt, **dadurch gekennzeichnet, dass** in einem Längsträger (1) des Rahmens ein Portal (11) gebildet ist, und dass Mittel (18, 19) zum wenigstens teilweisen, insbesondere wenigstens einseitigen Blockieren der Schwenkbarkeit des vorderen Fahrwerksteils um die Ausgleichsachse (5) im Falle des Eingriffs eines Rades (15) in das Portal (11) vorgesehen sind.

2. Transportwagen nach Anspruch 1, **dadurch gekennzeichnet, dass** der vordere Fahrwerksteil kleinere Räder (15) aufweist als der hintere Fahrwerksteil.

3. Transportwagen nach Anspruch 1 oder 2, **dadurch gekennzeichnet, dass** die Lenkachse durch einen Drehkranz (16) festgelegt ist.

4. Transportwagen nach Anspruch 3, **dadurch gekennzeichnet, dass** die Ausgleichsachse (5) durch ein Gelenk festgelegt ist, das die wenigstens eine Radachse (14) des vorderen Fahrwerksteils mit dem Drehkranz (16) verbindet.

5. Transportwagen nach einem der vorhergehenden Ansprüche, **dadurch gekennzeichnet, dass** die Mittel (18, 19) zum wenigstens teilweisen Blockieren der Schwenkbarkeit ausgelegt sind, um die Radachse (14) aus einer Mittelstellung der Schwenkbewegung um die Ausgleichsachse (5) auszulenken.

6. Transportwagen nach einem der vorhergehenden Ansprüche, **dadurch gekennzeichnet, dass** die Mittel (18, 19) zum wenigstens teilweisen Blockieren der Schwenkbarkeit eine Kufe (18) und eine im Falle des Eingriffs eines Rades (15) in das Portal (11) an der Kufe (18) anliegende Rolle (19) umfassen.

7. Transportwagen nach Anspruch 6, **dadurch gekennzeichnet, dass** die Kufe (18) am Rahmen (1, 3, 4) und die Rolle (19) am vorderen Fahrwerksteil angebracht ist.

## Claims

1. A transport vehicle for a harvester attachment comprising a frame (1, 3, 4) and a front and a rear chassis portion respectively having at least one wheel axle (14; 12), wherein the front chassis portion is pivotable in relation to the frame about a vertical steering axis and a horizontal compensating axis (5), and the compensating axis (5) pivots together with the at least one wheel axle (14) of the front chassis portion about the steering axis, **characterised in that** a portal (11) is formed in a longitudinal bearer (1) of the frame and that there are provided means (18, 19) for at least partial and in particular at least one-sided blocking of the pivotability of the front chassis portion about the compensating axis (5) in the case of engagement of a wheel (15) into the portal (11).

2. A transport vehicle according to claim 1 **characterised in that** the front chassis portion has smaller wheels (15) than the rear chassis portion.

3. A transport vehicle according to claim 1 or claim 2 **characterised in that** the steering axis is established by a turntable (16).

4. A transport vehicle according to claim 3 **characterised in that** the compensating axis (5) is established by a joint which connects the at least one wheel axle (14) of the front chassis portion to the turntable (16).

5. A transport vehicle according to one of the preceding claims **characterised in that** the means (18, 19) for at least partially blocking the pivotability are adapted to deflect the wheel axle (14) out of a central position of the pivotal movement about the compensating axis (5).

6. A transport vehicle according to one of the preceding claims **characterised in that** the means (18, 19) for at least partially blocking the pivotability include a skid (18) and a roller (19) which bears against the skid (18) in the case of engagement of a wheel (15) into the portal (11).

7. A transport vehicle according to claim 6 **characterised in that** the skid (18) is mounted to the frame (1, 3, 4) and the roller (19) is mounted to the front chassis portion.

## Revendications

1. Chariot de transport pour un tablier de coupe d'une moissonneuse avec un cadre (1, 3, 4) et une partie de mécanisme de roulement avant et arrière présentant respectivement au moins un essieu de roue (14 ; 12), la partie de mécanisme de roulement avant pouvant pivoter par rapport au cadre autour d'un essieu directeur vertical et d'un axe de compensation (5) horizontal, l'axe de compensation (5) pivotant autour de l'essieu directeur conjointement avec l'au moins un essieu de roue (14) de la partie de mécanisme de roulement avant, **caractérisé en ce qu'**un portique (11) est formé dans un longeron (1) du cadre et **en ce que** des moyens (18, 19) sont prévus pour le blocage au moins partiel, en particulier au moins unilatéral de la pivotabilité de la partie de mécanisme de roulement avant autour de l'axe de compensation (5) en cas d'engagement d'une roue (15) dans le portique (11).

2. Chariot de transport selon la revendication 1, **caractérisé en ce que** la partie de mécanisme de roulement avant présente de plus petites roues (15) que la partie de mécanisme de roulement arrière.

3. Chariot de transport selon la revendication 1 ou 2, **caractérisé en ce que** l'essieu directeur est fixé par une couronne de pivotement (16.).

4. Chariot de transport selon la revendication 3, **caractérisé en ce que** l'axe de compensation (5) est fixé par une articulation qui relie l'au moins un essieu de roue (14) de la partie de mécanisme de roulement avant à la couronne de pivotement (16).

5. Chariot de transport selon l'une quelconque des revendications précédentes, **caractérisé en ce que** les moyens (18, 19) sont configurés pour le blocage au moins partiel de la pivotabilité afin de dévier l'essieu de roue (14) d'une position médiane du mouvement de pivotement autour de l'axe de compensation (5).

6. Chariot de transport selon l'une quelconque des revendications précédentes, **caractérisé en ce que** les moyens (18, 19) comportent pour le blocage au moins partiel de la pivotabilité un patin (18) et un rouleau (19) reposant sur le patin (18) en cas d'engagement d'une roue (15) dans le portique (11).

7. Chariot de transport selon la revendication 6, **caractérisé en ce que** le patin (18) est monté sur le cadre (1, 3, 4) et le rouleau (19) sur la partie de mécanisme de roulement avant.
